# EUROPEAN PATENT APPLICATION

(11) **EP 1 591 496 A1**
(43) Date of publication of application: **02.11.2005**
(21) Application number: 05102934.6
(22) Date of filing: 14.04.2005
(51) Int. Cl.: C09D 11/00, C07C 235/80, C07C 45/76, C07C 69/716, C07C 69/738, C07C 49/00

(54) **Hot melt ink having carrier derived from alkylketene dimer**

(30) Priority: 28.04.2004 EP 04076260
(71) Applicant: Océ-Technologies B.V., 5914 CC Venlo (NL)
(72) Inventor: Kuiper, Johannes H.A., 5971 AA Grubbenvorst (NL); Wetjens, Peter M.A., 5976 PM Kronenberg (NL); Kremers, Martinus A., 6595 AT Ottersum (NL)
(74) Representative: Janssen, Paulus J. P.

(57) **Abstract**

The invention relates to a hot melt ink at least comprising a colorant, a binder, and a carrier obtained by reacting C6-C24 alkylketene dimer with a reactant selected from i.a. alcohol, amine, mercaptan, carboxylic acid, carboxaminde and ammonia. More preferably the carrier is selected from

R₁-X₁-CO-CHR₃-CO-R₂ (I);

R₂-CO-CHR₃-CO-X₂-R₄-X₃-CO-CHR₉-CO-R₈ (II);

and

R₅-CO-R₆ (III)

and mixtures
thereof;
wherein
X₁, X₂, and X₃ are independently selected from O, SH, NR₇, and oxycarbonyl [C(=O)-O]; R₁ is selected from C1-C50 alkyl or alkoxyalkyl, C7-C20 alkaryl, C5-C20 cycloalkyl, abietyl, and hydroabietyl;
R₇ is selected from H, C1-30 alkyl and C1-C30 acyl;
R₂, R₃, R₅, R₆, R₈ and R₉ are independently selected from C1-C50 alkyl or alkoxyalkyl, C7-C20 alkaryl, C5-C20 cycloalkyl, and C5-C20 alkenyl;
R₄ is selected from C2-C20 alkylene or alkoxyalkylene, C7-C20 alkarylene, cyclohexylene, C8-C20 mono- or dialkylenecylcohexylene; biphenylene, phenyleneoxyphenylene, and (bisphenylene)alkylene;
wherein each of the alkyl and alkylene groups may be a branched or unbranched, saturated or unsatured alkyl and alkylene group

## Description

The invention relates to a hot melt ink at least comprising a colorant, an optional binder, and a carrier, to the use of said carrier for making a hot melt ink, and to a method of printing a receiving material with said hot melt ink compositions comprising the steps of heating the ink to above a temperature at which it is liquid and transferring imagewise the liquid ink to a receiving element.

In general, hot melt inks are in the solid phase at ambient temperature, but exist in the liquid phase at the elevated operating temperature of an ink jet printing device. At the jet operating temperature, droplets of liquid ink are ejected from the printing device and, when the ink droplets contact the surface of the printing media or an intermediate transfer surface, they quickly solidify to form a predetermined pattern of solidified ink drops.
They are easy to use and safe. They can be easily loaded into the printer by the user, generally in the form of solid sticks of yellow, magenta, cyan, and black ink. Inside the printer, these inks are melted at an elevated temperature in a print head having a number of orifices, through which the melted ink will be ejected onto the desired media substrate such as paper or an overhead transparency film. Alternatively, the melted ink may be transferred to a rotating drum and then transferred to the substrate. As the ink cools on the substrate, it re-solidifies to form the predetermined image. This resolidification process, or hot melt, is instantaneous and a printed, dry image is thus made upon leaving the printer, and is available immediately to the user.

The hot melt printing method using hot melt printing inks is for instance described in EP 1378357, disclosing a method wherein an elastomer is used having a hardness less than 80 Shore A, has a thermal conductivity coefficient greater than 0.15 W/mK, has an ink absorption less than 10 %, and a tan delta less than 0.3.

The hot melt inks generally comprise a hot melt ink carrier composition, which is combined with at least one compatible hot melt ink colorant. The carrier composition has been generally composed of resins, fatty acid amides, and resin derived materials. Also, plasticizers, waxes, antioxidants and the like have been added to the carrier composition. Generally the resins used are water-insoluble and the carrier composition contains no ingredients that are volatile at the jetting temperatures employed. Also, these carrier ingredients should be chemically stable so as not to lose their chemical identity over time and/or under elevated temperature conditions. The conventional carriers are fatty amides, such as disclosed in US 5372852, or imides such as disclosed in US 6322624.

Preferably, a colored hot melt ink will be formed by combining the above described ink carrier composition with compatible colorant materials, preferably subtractive primary colorants. The subtractive primary colored hot melt inks comprise four dye components, namely, cyan, magenta, yellow and black.

The carriers for hot melt inks preferably have no or low solubility at temperatures below the crystallization temperature and solubility in a solvent at temperatures above the melting point. Furthermore, the carriers preferably have a yield stress which can be adjusted by using various amounts or kinds of crystallized carrier to manage the ink jet process via a rubber(like) intermediate. It is known that the hereinabove mentioned conventional hot melt inks, such as fatty acid amides including octadecanamide, stearyl stearamide, and the like, show lack of thermal stability, which necessitates the addition of antioxidants. These conventional inks further have an unfavorable soft wax-like character, which makes them smearable. Therefore there is a considerable need to hot melt inks without the hereinbefore mentioned disadvantages, being harder and having improved intrinsic strength and therefore not being smearable.

To this end it was found that improved hot melt inks can be made by using carriers that are obtained by reacting an alkylketene dimer with a non aqueous reactant comprising a compound having a reactive hydrogen atom, preferably selected from alcohol, mercaptan, amine, carboxylic acid, carboxamide and ammonia (or an ammonia-generating compound, such as ammonium carbamate or ammonium carbonate). Non aqueous in this sense meaning comprising less then about 10% water.

The present carriers give freedom in the choice of inks. This is important because the ink already has to meet many requirements: it must be capable of processing in an inkjet print head, it must be able to enter into sufficient interaction with the receiving material, it must be hard sufficiently rapidly after cooling (so that a printed receiving material can be subjected to mechanical load rapidly, for example by using it as an input to another printer) and it must be durable so that printed images do not spoil in the course of time.

It has been found that the inks in combination with the method according to the present invention result in an indirect printing process with a very good transfer yield (up to 100%) and a good image quality. The invention also relates to the combination of such an ink and a printer suitable for applying the method according to the present invention. It has surprisingly been found that this combination results in very good print results despite the fact that the printer contains an intermediate element having a surface of a relatively soft elastomer.

The elastomer used in the intermediate element can be selected from the group consisting of silicone rubber, fluorosilicone rubber and perfluoropolyether rubber. Elastomers of this kind are sufficiently well known from the prior art. These materials have a low surface tension, so that they often have intrinsically good release properties. It has been found possible to obtain elastomers of each of these types which meet the requirements for use in a method according to the invention. Also, these rubbers can be obtained in thermally stable forms, making them pre-eminently suitable for use in the method according to the invention.

Elastomers suitable for use in a method according to the present invention, are selected by determining the polar part of the surface tension of the elastomer, determining the hardness of the elastomer, determining the thermal conductivity coefficient of the elastomer, determining the ink absorption of the elastomer, determining the tan delta of the elastomer, wherein the elastomer is selected if the polar part of the surface tension is up to 20 mN/m, the hardness is less than 80 Shore A, the thermal conductivity coefficient is greater than 0.15 W/mK, the ink absorption is less than 10%, and the tan delta is less than 0.3. Such determination can be carried out in any desired manner. For example, it would be possible to determine a parameter by estimating it: if, for example, it is clear a priori on the basis of the raw materials used that the value of that parameter is in every case within the limits according to the present invention, then that can be regarded as a determination of the value of that parameter. Thus a silicone rubber made in a correct manner will have a polar part of the surface tension between 0.1 and 4 mN/m.

The carriers according to the invention can be prepared by conventional methods. In a suitable method of preparation commercially available fatty acids are converted in a known manner to alkylketene dimer, for instance as disclosed in the standard handbook of Kirk and Othmer, Vol. 13, pp. 875-893 (3^{rd} Edition). Many alkylketene dimers are also commercially available, such as Aquapel® and Precis® (both ex Hercules Powder Co.). The alkylketene dimers can be reacted with, for instance, mono-, di-, tri- etc. alcohols, mercaptans, amines, acids, amides, ammonia or ammonia-generating compound, or compounds with a mixed functionality such as an hydroxyamine to obtain carriers according to the invention. This process is depicted in the Scheme.

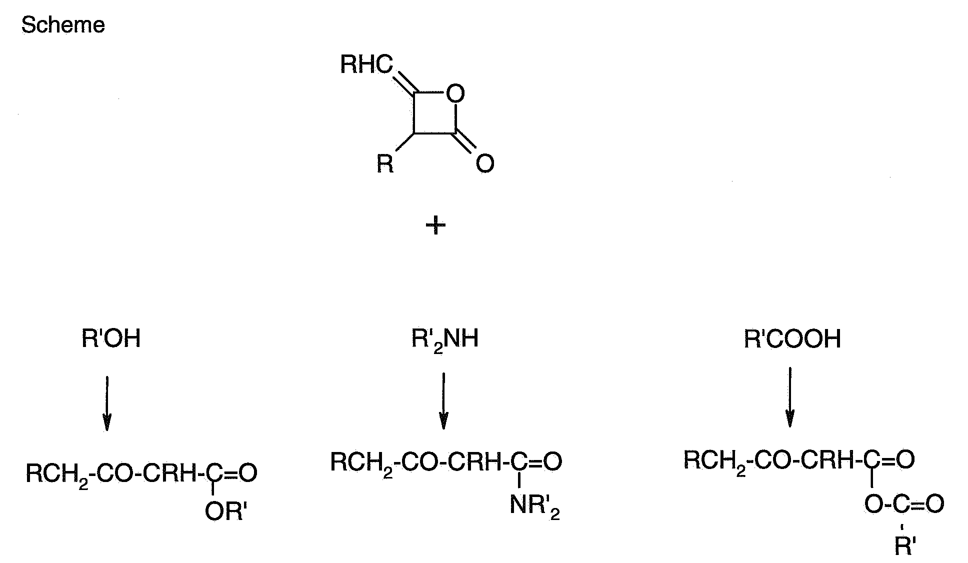

When using ammonia or an ammonia-generating compound (such as ammonium carbamate) as the reactant, amides are obtained. Suitable carriers according to the invention have a hardness of at least 5 N/mm², preferably at least 20 N/mm² at room temperature, a melting point below 140° C, preferably below 100° C, and a crystallization point of at least 50° C. The carriers should have a low viscosity, preferably less than 15 mPas at 130° C.

More preferably, the carrier has the formula selected from:

R₁-X₁-CO-CHR₃-CO-R₂ (I);

R₂-CO-CHR₃-CO-X₂-R₄-X₃-CO-CHR₉-CO-R₈ (II);

and

R₅-CO-R₆ as a possible side product (III)

and mixtures
thereof;
wherein
X₁, X₂, and X₃ are independently selected from O, SH, NR₇, and oxycarbonyl [C(=O)-O]; R₁ is selected from C1-C50 alkyl or alkoxyalkyl, C7-C20 alkaryl, C5-C20 cycloalkyl, abietyl, and hydroabietyl;
R₇ is selected from H, C1-30 alkyl and C1-C30 acyl;
R₂, R₃, R₅, R₆, R₈ and R₉ are independently selected from C1-C50 alkyl or alkoxyalkyl, C7-C20 alkaryl, C5-C20 cycloalkyl, and C5-C20 alkenyl;
R₄ is selected from C2-C20 alkylene or alkoxyalkylene, C7-C20 alkarylene, cyclohexylene, C8-C20 mono- or dialkylenecylcohexylene; biphenylene, phenyleneoxyphenylene, and (bisphenylene)alkylene;
wherein each of the alkyl and alkylene groups may be a branched or unbranched, saturated or unsatured alkyl and alkylene group.

Preferred reagents in the above Scheme are alcohols, amines, and carboxylic acids, containing aliphatic groups (i.e., R' in the Scheme) such as methyl, ethyl, (n- and iso-) propyl, (n-, iso-, s- and t-) butyl, (n-, iso-, t-, and the like) pentyl, (n-, iso-, t-, and the like) hexyl, (n-, iso-, t-, and the like) octyl, (n-, iso-, t-, and the like) nonyl, (n- and branched) decyl, (n- and branched) undecyl, (n- and branched) octadecyl, (n- and branched) hexadecyl, (n- and branched) dodecyl, cyclohexyl, 2,3-di methyl-1-cyclohexyl, or any aromatic group such as phenyl, diphenyl, phenoxyphenyl, benzyl, and alkyl substituted analogues thereof.

Preferred carriers have groups R₂, R₃, R₅, R₆, R₈, and R₉ being C6-C24 alkyl, more preferably C14-C22 alkyl. Specifically useful alkyl groups are branched and unbranched alkyl groups derived from saturated and unsaturated fatty acids including caproic (C6), caprylic (C8), capric (C10), lauric (C12), myristic (C14), palmitic (16), stearic (C18), behenic (C22), oleic (C18), elaidic (C18), cis-11-eisosenoic (C20), erucic (C22), and the like. Where applicable, alkyl groups may also be lower alkyl groups such as propyl, butyl, isobutyl, pentyl, hexyl and the like.
When R is an alkoxyalkyl moiety, such moiety is an alkyl group containing one or more oxygen atoms in its chain. Examples are 3-methoxypropyl, 2-ethoxyethyl, propoxymethyl, and the like.

Alkylene groups in the definition of R₄ are alkylene groups having 2 - 20 carbon atoms, such as ethylene, propylene, 2,2-dimethylpropylene, butylene, 2,3-dimethylbutylene, and the like.
The alkoxyalkylene groups are similar to the above alkylene groups, but they contain in addition one or more oxygen atoms in their chain. Examples are 3-methyleneoxypropylene, 2-ethyleneoxyethylene, propyleneoxymethylene, and the like. Particularly useful groups R₄ are selected from ethylene, cyclohexylene, cyclohecyl-1,3-bismethylene, and cyclohexyl-1,4-bismethylene.

Further examples of the various groups X and R are given in the Table in the experimental part.

The colorants and pigments employed in the hot melt ink compositions of the present invention may be any subtractive primary colorant or pigment compatible with the particular hot melt ink carrier composition employed. The subtractive primary colored hot melt inks of this invention generally comprise dyes providing primary component colors, namely, cyan, magenta, yellow, and black. The dyes employed as subtractive primary colorants may be dyes from the following dye classes: Color Index (C.I.) dyes, solvent dyes, disperse dyes, modified acid and direct dyes, and basic dyes. Besides these classes of dyes, the ink compositions of the present invention may also include selected polymeric dyes as one or more colorants.

The compositions may also contain a binder. These include, for example, KE-311 or KE-100 resins (glycerol ester of hydrogenated abietic [rosin] acid made by Arakawa Chemical Industries, Ltd.), FORAL® 85 (a glycerol ester of hydrogenated abietic [rosin] acid), FORAL® 105 (a pentaerythritol ester of hydroabietic [rosin] acid), CELLOYN® 21-E (a hydroabietic [rosin] alcohol ester of phthalic acid), all manufactured and sold under the listed trade names by Eastman, NEVTAC® 2300 and NEVTAC® 80, synthetic polyterpene resins manufactured and sold under the listed trade name by Neville Chemical Company, and WINGTACK® 86, a modified synthetic polyterpene resin manufactured and sold under the listed trade name by Goodyear Chemical Company.

Other binders that can be added to the formulation are, for instance, many of the phthalate ester plasticizers sold by Monsanto under the trade name SANTICIZER® are suitable for this purpose, such as SANTICIZER® 278, which is the mixed di-ester of phthalic acid with benzyl alcohol, and 2,2,4-trimethyl-1,3-pentanediol mono(2-methylpropanoate) sold under the trade name "TEXANOL®". Preferred agents are STAYBELITE® Resin-E by Eastman, CELLOLYNE® 21-E by Eastman, GLYPO-CHI (according to US patent No. 6,471,758; reaction product of glycerolpropoxylate (1/1 PO/OH) and cyclohexylcyanate or phenylcyanate), and SYLVARES® 520, ex Arizona Chemicals).

Various modifying agents may be added to a hot melt ink carrier composition along with the carrier. These include fatty acid amide-containing materials such as tetra-amide compounds, hydroxy-functional tetra-amide compounds, mono-amides, and hydroxy-functional mono-amides, and mixtures thereof.

Other additives may also be combined with the hot melt ink carrier composition. In a typical hot melt ink chemical composition antioxidants are added for preventing discoloration of the carrier composition. The preferred antioxidant materials can include IRGANOZ® 1010 by Ciba Geigy; and NAUGARD® 76, NAUGARD® 445, NAUGARD® 512, and NAUGARD® 524 by Uniroyal Chemical Company. However, most of the present carriers do not need such antioxidants, or at least need considerable lower quantities thereof in comparison with the known carriers of the prior art.

Viscosity reducing agents may also be employed in the ink compositions of the present invention. Use of a viscosity reducing agent allows the viscosity of the ink composition to be adjusted to a desired value. Suitable viscosity reducing agents for use in ink compositions of the present invention include stearyl stearylamide, stearyl monoethanolamide stearate, and ethylene glycol distearate (EGDS). One preferred viscosity reducing agent is Kemamide® S-180 stearyl stearylamide made by Witco Chemical Co. The viscosity reducing agent may be present in an amount of from about 0 to about 50% by weight of the ink composition. The specific amount of viscosity reducing agent used in a given ink composition depends on the viscosity desired by the user. However, one of the advantages of the present carrier is their versatility which makes it possible to adjust the viscosity by selecting particular alkylketene dimers and particular alcohols, amines, or esters, and by selecting the amount of the product thereof in the ink composition, without the need of adding other viscosity reducing agents.

In another aspect the invention also pertains to a method of printing a receiving material with a hot melt ink composition comprising:
- heating the ink to above a temperature at which it is liquid;
- transferring imagewise the liquid ink to a receiving element; and
- optionally fusing the ink-containing receiving element;
characterized in that the hot melt ink composition comprises a carrier as presented before.
The method includes both methods wherein the ink is transferred to the paper (receiving element) to be printed directly, or to an indirect process wherein the ink is first transferred to an intermediate element and then to the receiving element.

The invention will now be explained in detail with reference to the following examples.

### General

### DSC:

The melt and crystallization temperature of hot melt inks can be determined by differential scanning calorimetry (DSC). Measurment can be performed with a Perkin Elmer DSC7 or a Perkin Elmer Pyris 1 DSC apparatus. About 6 mg of sample is weighed in a 50 µl aluminum 2 bar capsule, and the capsule is then paced in the DSC apparatus. Then the following program is followed: 5 min at -50° C, heating from -50° C to X° C, keeping 2 min at X° C, cooling from X° C to -50° C, keeping 5 min at -50° C, heating from -50° C to X° C; wherein the heating and cooling rate is 20° C/min; and X is a temperature being at least 20° C higher than the melt temperature of the ink. The melt temperature and the melt heat are determined using the second heating run. The crystallization temperature and the crystallization heat are determined uisng the cooling curve.

### Viscosity (η)

The viscosity was measured according to DIN53018.
Apparatus: Rheometrics DSR-200
Measurement geometry: parallel plate; typical dimensions: plate diameter 40 mm / gap between plates: 0.5 - 0.6 mm.
The material is brought between the two plates in the molten state in such a way that the gap is completely filled.

The viscosity is determined in the steady shear mode at the required temperature (above the melting point). The materials show Newtonian behavior allowing for the use of the parallel plate geometry. The Rheometrics DSR-200 is a stress-controlled instrument. This means that the shear stress is applied and the resulting shear rate is measured. The shear viscosity is the ratio of shear stress divided by shear rate. The reported viscosity is the mean value of measurements at about 10 different shear stresses (chosen in such a way that a range of shear rates between 0 and 1000 1/s is covered). At each stress the flow is stabilized for at least 30 seconds before the shear rate is measured.

### Hardness (HU)

The hardness was measured as follows:
Apparatus: Fischerscope HCU H100 VS hardness meter (Fischer Instruments)
The Fischerscope apparatus measures the penetration depth of a Vickers indenter (pyramid-form diamond needle, top angle 136°) dependent from force during impression.
The measurement is performed according to the following steps:
1. The indenter is pressed into a smooth block of ink in a number of steps at equidistant having root (F).
2. For 10 sec the force is kept at 1 N.
3. The indenter is withdrawn in a number of steps at equidistant having root (F).
4. For 10 sec the force is kept at 0.4 mN.
For each of these process steps the penetration depth is registered.
This method allows determination of the Universal Hardness (HU), the creep force, and the plastic and elastic deformations.

### Syntheses

When primary amines are reacted to compounds with one alkyl ketene dimer (AKD) group per amine group, a catalyst is not required.
When reaction is performed with alcohols, carboxylic acid, and mercaptans it is preferred to use a catalyst. When carboxamides, secondary amines, or two AKD's that are attached to a primary amine are used, the use of a catalyst is strongly preferred. Suitable catalysts are TEA (triethylamine), TMAH (tetramethylammonium hydroxide), TMAC (tetramethylammonium chloride), TPA (tripropylamine), TEAH (tetraethylammonium hydroxide), and DMAP (4-dimethylaminopyridine).

Gaseous ammonia can directly be obtained from an ammonia cylinder, but preferably it is obtained by heating ammonium carbamate or ammonium carbonate that decompose to gaseous dry ammonia.
In the following examples 1 molecule of AKD per amino- or hydroxy group was used under maintenance of the stoechiometric ratios.

### Example 1

To a 1000 ml three-necked bottle provided with a magnetic stirrer, thermometer, nitrogen inlet, and a feed inlet with cooler were added:
150.0 g of Aquapel® 291 (Hercules; octadecyldiketene, stearyl diketene): 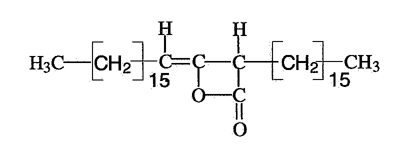 and 375 ml of toluene.
The mixture was heated at a bath temperature of 130° C under stirring until a clear solution was obtained. Then 59.8 g of hexadecylamine (Aldrich; palmitylamine) were slowly added
The mixture was refluxed overnight. The hot mixture was poured into about 300 ml of boiling toluene, and the clear yellow solution was cooled down under stirring to crystallize the product. The crystals were filtered and dried in a vacuum oven at 75° C and 20 mbar.
186.6 g of a light yellow compound were obtained having a melting point according to Stuart of 96-97° C.
To eliminate the rest activity and to decolorize the product it was dissolved in 800 ml of boiling toluene and filtered over a silica gel cotumn using standard dried silica 0.063-0.2 mm. The obtained solution was clear. After filtering, crystallization, and drying 170.6 g of a white colored product: 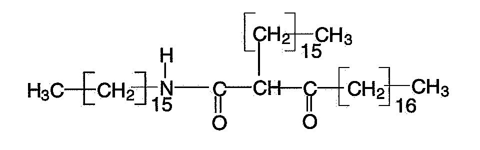 were obtained. Melting point (Stuart): 98-100° C; viscosity at 130° C 8.6 mPa.s.
Entries 1-8, 11-12, 15, 18, 20-22, 24 (see Table) were prepared in a similar manner.

### Example 2

To a 250 ml three-necked bottle provided with a magnetic stirrer, thermometer, nitrogen inlet, thermometer, two-necked adapter with cooler were added:
50.0 g of Aquapel® 532 (behenyldiketene, Hercules): 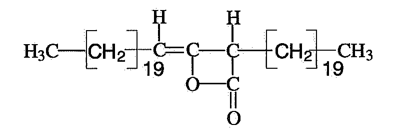 20.9 g of docosanol (behenyl alcohol, Aldrich), and
125 ml of toluene.
The mixture was heated under stirring at a bath temperature of 130° C until everything was completely melted and dissolved. Then about 0.20 g of TEA (triethylamine, Merck) were added. The mixture was refluxed for 3-4 h, after which the toluene was evaporated and the mixture was poured onto aluminum film. The product was dried in a vacuum oven at 125° C at 20 mbar to give 69.1 g of a yellow-white compound having a melting point (Stuart) of 72-73° C and having the chemical structure:

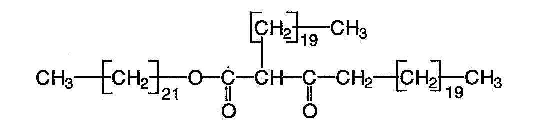

The viscosity at 130° C was 6.1 mPa.sec and the HU hardness 16 N/mm².

In a similar manner entries 9, 16, 17, and 23 were prepared.

### Example 3

To a 500 ml three-necked bottle provided with a magnetic stirrer, thermometer, nitrogen inlet, and a feed inlet with cooler were added:
100.0 g of Aquapel® AQ532 (behenyldiketene, Hercules): 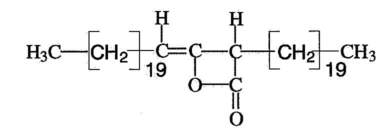 in 250 ml of toluene.

The mixture was heated under stirring until it was dissolved and then slowly 3.4 g of 2-aminoethanol (Aldrich) were added.
The mixture started to reflux immediately after the addition of ethanolamine and was refluxed for another 3 h. After evaporation of toluene 74.1 g of a light yellow powder were obtained, which were dried for 24 h in a vacuum oven at 125° C and 20 mbar.

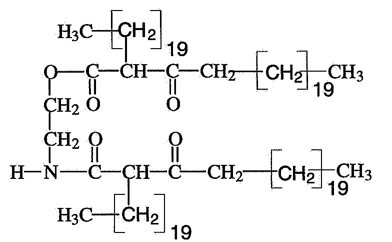

### Chemical structure:

melting point (Stuart) 83° C.
Viscosity at 130° C 8.0 mPa.s

In a similar manner entries 10, 13, and 14 were prepared.

### Example 4

To a 2000 ml three-necked bottle provided with a magnetic stirrer, thermometer, nitrogen inlet, and a feed inlet with cooler were added:
300 g of Aquapel® AQ 532 (Hercules, eicosyldiketene, behenyldiketene): 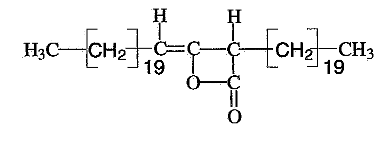 60.0 g of ammonium carbamate (Merck) and
1500 ml of toluene.
The mixture was heated to 100° C and ammonium carbamate was added in 1.5 h in small portions at a temperature of about 112° C. After reflux for 3 h the toluene was evaporated, the mixture was poured onto aluminum film, and then dried for a few hours in a vacuum oven at 125° C. A crystalline almost white powder was obtained with a melting point (Stuart) of 115-116° C.
The chemical structure can be represented by:

### A (main product):

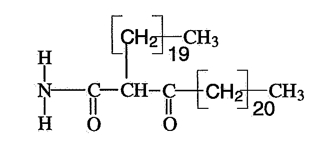

### B (side product):

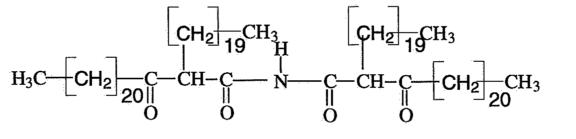

Side product B can be formed when excess of the alkyl diketene is used.
Viscosity at 130° C 8.6 mPa.s
Hardness HU: 39 N/mm²

In Table 1 the properties of carriers made according to the above methods are given.

**Table 1**

| Entry | Alkylketene dimer | Reactant | Tm (°C) | Tc (°C) | η (130°C | HU (N/mm²) |
|---|---|---|---|---|---|---|
| 1 | behenyldiketene | octadecylamine | 102 | 88 | 8.5 | 37 |
| 2 | Behenyldiketene | tridecylamine | 92 | 79 | 8.3 | 24 |
| 3 | Behenyldiketene | octylamine | 88 | 66 | 8.0 | 43 |
| 4 | Behenyldiketene | 4-ethylaniline | 100 | 70 | 8.5 | 47 |
| 5 | Behenyldiketene | 3-methoxy-propylamine | 97 | 75 | 6.7 | 58 |
| 6 | Stearyldiketene | hexadecylamine | 98 | 84 | 7.8 | 34 |
| 7 | Stearyldiketene | Cyclohexyl-amine | 89 | 70 | n.d. | n.d. |
| 8 | Stearyldiketene | 3-methoxy-propylamine | 93 | 74 | 5.4 | n.d. |
| 9 | Behenyldiketene | 1,2-ethansdiol | 63 | 55 | 7.2 | 34 |
| 10 | Behenyldiketene | 2-aminoethanol | 75 | 63 | 8.0 | 31 |
| 11 | Behenyldiketene | 1,2-diaminoethane | 114 | 100 | 13 | 53 |
| 12 | stearyl/ palmityldiketene | 1,2-diaminoethane | 112 | 96 | 20.4 | 55 |
| 13 | behenyldiketene | 3-(1-hydroxy-ethyl) aniline | 64 | 53 | 10.7 | 41 |
| 14 | behenyldiketene | 4-aminophenethyl alcohol | 96 | 61 | 13.5 | 39 |
| 15 | stearyldiketene ' | 1,3-cyclohexyl bis(methylamine) | 101 | 69 | 19.4 | 48 |
| 16 | behenyldiketene | 4,4'-dihydroxy-diphenyl ether | 53 | 42 | 10.9 | 41 |
| 17 | stearyldiketene | 4,4'-b'isphenol | 53 | 33 | 11.5 | 40 |
| 18 | behenyldiketene | 1,3-diamino-2,2-dimethylpropane | 66 | 64 | 12.0 | 49 |
| 19 | behenyldiketene | ammonium carbamate | 100 | 76 | 8.6 | 57 |
| 20 | behenyldiketene | hexadecylamine | 95 | 81 | 7.5 | n.d. |
| 21 | stearyldiketene | octadecylamine | 99 | 82 | 8.5 | n.d. |
| 22 | stearyldiketene | tridecylamine | 93 | 75 | 7.8 | n.d. |
| 23 | behenyldiketene | docosanol | 71 | 63 | 6.1 | 16 |
| 24 | behenyldiketene | dodecylamine | n.d. | n.d. | n.d. | n.d. |
| n.d. not determined behenyldiketene (docosanyldiketene) (ex. Hercules Powder Co.) stearyldiketene (octadecyldiketene) (ex. Hercules Powder Co.) stearyldiketene/palmityldiketene (ex. Hercules Powder Co.) | | | | | | |

The chemical structures are given in Table 2.

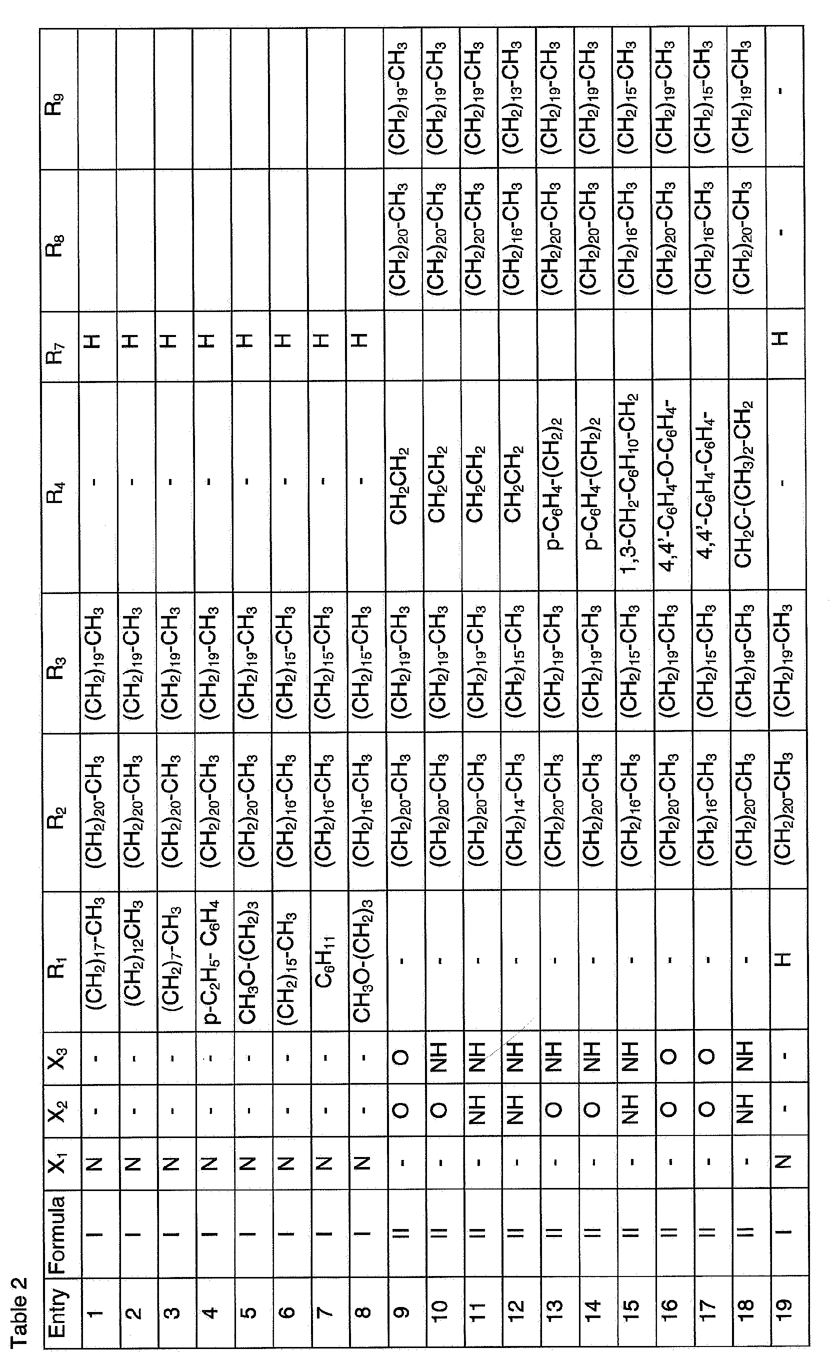

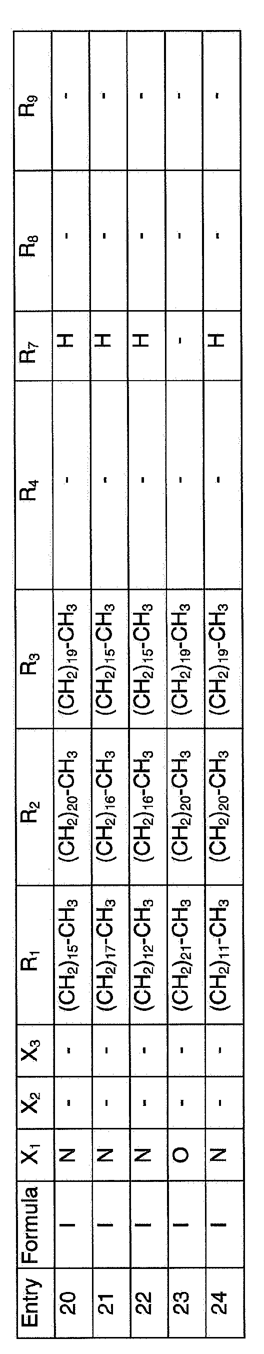

### Example 5

### Preparation of hot melt ink compositions

The following compositions were prepared:
A) 50 wt.% of the product of entry 22
   50 wt.% Glypo-chi® (cyclohexyl urethane of glyceryl propoxylate)
   2 phr Savinyl black® RLSN (CI solvent black 45, ex Clariant)
B) 50 wt.% of the product of entry 5
   50 wt.% Cellolyn® 21 E (phthalate ester of hydroabietyl alcohol, ex Eastman)
   2 phr % Savinyl black® RLSN (CI solvent black 45, ex Clariant)
C) 50 wt.% of the product of entry 20
   50 wt.% Staybelit® resin-E (partially hydrogenated rosin, ex Eastman)
   2 phr Savinyl black® RLSN (Cl solvent black 45, ex Clariant)
D) 50 wt.% of the product of entry 21
   50 wt.% Sylvares® 520 (phenol-modified copolymer of styrene and alphamethylstyrene, ex Arizona Chemical)
   2 phr Savinyl black® RLSN (CI solvent black 45, ex Clariant)
E) 50 wt.% of the product of entry 6
   50 wt.% Cellolyn® 21 E (phthalate ester of hydroabietyl alcohol, ex Eastman)
   2 phr Savinyl black® RLSN (CI solvent black 45, ex Clariant)
F) 50 wt.% of the product of entry 1
   50 wt. % Cellolyn® 21 E
   2 phr Telajet® NS (solvent black 27, ex Clariant)

Before use these inks were filtered over a metal filter to remove insoluble remains.

## Claims

1. A hot melt ink comprising a colorant, an optional binder and a carrier obtained by reacting an alkylketene dimer with a non-aqueous reactant comprising a compound having a reactive hydrogen atom.

2. The hot melt ink according to claim 1, wherein the carrier is obtained by reacting the alkylketene dimer with a reactant selected from alcohol, amine, mercaptan, carboxylic acid, carboxamide and ammonia.

3. The hot melt ink of claim 1 or 2 wherein the carrier is selected from
R₁-X₁-CO-CHR₃-CO-R₂ (I);
R₂-CO-CHR₃-CO-X₂-R₄-X₃-CO-CHR₉-CO-R₈ (II);
and
R₅-CO-R₆ (III)
and mixtures
thereof;
wherein
X₁, X₂, and X₃ are independently selected from O, SH, NR₇, and oxycarbonyl [C(=O)-O];
R₁ is selected from C1-C50 alkyl or alkoxyalkyl, C7-C20 alkaryl, C5-C20 cycloalkyl, abietyl, and hydroabietyl;
R₇ is selected from H, C1-30 alkyl and C1-C30 acyl;
R₂, R₃, R₅, R₆, R₈ and R₉ are independently selected from C1-C50 alkyl or alkoxyalkyl, C7-C20 alkaryl, C5-C20 cycloalkyl, and C5-C20 alkenyl;
R₄ is selected from C2-C20 alkylene or alkoxyalkylene, C7-C20 alkarylene, cyclohexylene, C8-C20 mono- or dialkylenecylcohexylene; biphenylene, phenyleneoxyphenylene, and (bisphenylene)alkylene;
wherein each of the alkyl and alkylene groups may be a branched or unbranched, saturated or unsatured alkyl and alkylene group.

4. The hot melt ink of claim 3 wherein R₃ is C6-C24 alkyl.

5. The hot melt ink of claim 3 or 4 wherein R₄ is selected from ethylene, cyclohexylene, cyclohexyl-1,3-bismethylene, and cyclohexyl-1,4-bismethylene.

6. Use of a carrier obtained by reacting an alkylketene dimer with a non aqueous reactant comprising a compound having a reactive hydrogen atom for making a hot melt ink further at least comprising a colorant and optionally a binder.

7. A method of printing a receiving element with a hot melt ink composition comprising:
- heating the ink to above a temperature at which it is liquid;
- transferring imagewise the liquid ink to a receiving element;
- optionally transferring the ink via an intermediate element to the receiving element; **characterized in that** a hot melt ink composition according to any of the claims 1-9 is used.
